# EUROPEAN PATENT APPLICATION

(11) **EP 4 335 306 A1**
(43) Date of publication of application: **13.03.2024**
(21) Application number: 23197012.0
(22) Date of filing: 12.09.2023
(51) Int. Cl.: A23N 15/04, A23N 15/02

(54) **DESTALKING MACHINE FOR FARM PRODUCTS AND METHOD FOR DESTALKING FARM PRODUCTS BY MEANS OF SAID DESTALKING MACHINE**

(30) Priority: 12.09.2022 IT 202200018555
(71) Applicant: Voltolina, Stefano, 30015 Chioggia (VE) (IT)
(72) Inventor: BASSOLI, Matteo, 30014 Cavarzere (VE) (IT)
(74) Representative: Caldon, Giuliano

(57) **Abstract**

Destalking machine (1) for farm products (100) which are each provided with a main axis (A) thereof, with an enlarged portion (101) with a stalk (102) and with a tip portion (103), and such destalking machine (1) comprises a support frame (2), an alignment group (5) and a destalking group (11). The alignment group (5) is provided with a series (S) of rollers (6) side-by-side and parallel to each other, which are extended each along a main extension axis (Y), are guidedly connected to the support frame (2) along an advancement direction (X) and each define, with the adjacent roller (6), a reception seat (8), and with movement means (9, 10) arranged for advancing the rollers (6) along the advancement direction (X) so as to transport the farm products (100) from the inlet section (3) of the support frame (2) towards the outlet section (4) of the support frame (2) and for rotating the rollers (6) along a first operating section (W) of the advancement direction (X). The rollers (6) have cylindrical shape, such that, when rotated along the first operating section (W), they orient the farm products (100) with the axes (A) parallel to the main extension axes (Y) and translate the farm products (100) along the reception seats (8) towards the ends (7) of the rollers (6) themselves towards which the tip portions (103) are directed. In addition, the alignment group (5) comprises abutment means (12), placed along a side (L) of the series (S) and adjacent to the corresponding ends (7) in order to receive the tip portions (103) of the farm products (100) against it, and the destalking group (11) is placed upstream of the outlet section (4) and comprises a cutting member (13) aligned with the abutment means (12) in order to remove the stalk (102) from the farm products (100).

## Description

### Field of application

The present invention regards a destalking machine for farm products, in particular strawberries, and a method for destalking farm products by means of the aforesaid destalking machine, according to the preamble of the respective claims 1 and 12.

The present destalking machine has particular application in the food field and mass distribution, since it is employed in order to automatically remove the stalks of the strawberries, so as to improve the preservation thereof and prevent them from being deteriorated, before they are frozen, packaged and distributed in supermarkets.

### State of the art

In the food field and mass distribution, it is known to remove the stalks from the strawberries, so as to prevent or limit, as much as possible, mold and marcescence and the deterioration of the taste, before freezing them and packaging them, before then distributing them to supermarkets.

In order to remove the stalks from the strawberries, destalking machines are known that are provided with a catenary carrying multiple transport trolleys mounted thereon, and each of such transport trolleys is provided with housing seats that are substantially funnel-shaped and therefore adapted to contain the substantially conical shape of the strawberries with the tip directed downwards and the enlarged portion with the stalk to be removed directed upward. The transport catenary is also provided with movement means which advance the transport trolleys along an advancement path through a destalking station, and such station is provided with a plurality of rotary mandrels, having the same spatial distribution as the housing seats of a transport trolley of the catenary. In particular, such mandrels are movable between a raised position, in which they are spaced by the catenary in order to allow the correct positioning of a transport trolley with the housing seats, each aligned below a mandrel, and a lowered position, in which the mandrels are moved close to the catenary in order to remove, during a rotation thereof, the stalks from the strawberries contained in the corresponding housing seats.

Nevertheless, the prior art destalking machine described briefly above has in practice demonstrated that it does not lack drawbacks.

The main drawback lies in the fact that the operation of loading the strawberries on the catenary, i.e. the insertion of the strawberries, each in a corresponding funnel-shaped housing seat of the transport trolleys, must be executed manually, with consequent long production times and the need of numerous operators employed for such loading operation. Therefore, such destalking machine provided with transport trolleys has important limits to the productivity set by the time necessary for the manual insertion of strawberries in the housing seats.

A further drawback lies in the low precision of such destalking machine in removing the stalks from strawberries. Indeed, all the rotary mandrels translate between the raised position and the position lowered by a same height, regardless of the shape and size of the strawberries contained in the housing seats of the transport trolleys aligned below each mandrel. Therefore, in the event in which a strawberry with dimensions smaller than average is contained in a funnel-shaped housing seat, the corresponding rotary mandrel will descend a predetermined height which could be insufficient for completely removing the stalk. On the other hand, in the event in which a strawberry with dimensions larger than average is contained in a funnel-shaped housing seat, the rotary mandrel will descend by the same identical predetermined height, which is greater than that necessary in order to remove the stalk, and will therefore also remove part of the pulp of the strawberry.

In order to at least partially overcome the problems of the prior art that were briefly mentioned above, known from the patent US 10,729,167 is a fully automated destalking machine provided with a catenary provided with rollers shaped in a manner such that the strawberries, once placed on the catenary itself, come on their own to occupy very precise positions on the catenary. Such catenary is indeed provided with multiple support shafts side-by-side and parallel to each other, each of which carries multiple hourglass-shaped rollers fit thereon, in a manner such that two adjacent rollers fit on two adjacent support shafts come to delimit a cradle susceptible of receiving a strawberry at its interior. In addition such destalking machine is provided with movement means arranged for advancing the support shafts with the hourglass-shaped rollers fit thereon and in order to rotate such support shafts and the rollers on themselves, in a manner such that the strawberries each come to occupy a corresponding cradle defined between two hourglass-shaped rollers of adjacent support shafts and are placed in the aforesaid cradle with the axis thereof substantially aligned with the main extension direction of the support shafts.

Nevertheless, also such destalking machine, even if it is able to place each strawberry with its axis substantially horizontal and parallel to that of the support shafts of the catenary and with a precise position (since each strawberry is contained in a corresponding cradle defined between side-by-side rollers of two adjacent support shafts), in practice has proven to be not free of drawbacks.

Indeed, it is not at all possible to predict nor to influence the orientation with which the strawberry will be placed in the corresponding cradle, i.e. it is not possible to predict at which of the two lateral ends of the cradle the tip portion of the strawberry is placed and at which lateral end of the cradle the enlarged portion of the strawberry with the stalk to be removed is placed.

Therefore, it is necessary to provide for, along the advancing path of the catenary, upstream of the destalking station, an identification station provided with optical sensors, e.g. cameras, in order to detect at which lateral end of each cradle the stalk of the respective strawberry contained therein.

In addition, the destalking station is provided with multiple movable blades for each cradle, i.e. at least one at one of the two lateral ends of the cradle and one at the other lateral end, in a manner such that, as a function of the information provided by the information supplied by the identification station, it is possible to actuate the blade which coincides with the lateral end of the cradle on the side where the stalk is placed.

Consequently, such destalking machine of the state of the art is extremely costly and complex, since it is necessary to arrange an identification station with cameras and with a control unit arranged for analyzing the images acquired by the cameras themselves, establishing the orientation according to which each strawberry is placed based on the aforesaid acquired images and driving the actuation of the movable blades of the destalking station as a function of the pre-established orientation of the strawberries.

In the state of the art, further destalker machines are known, such as for example that described in EP 2923586, which is provided with a catenary carrying, mounted thereon, multiple cradles each formed by two rollers with concave lateral surfaces, in order to receive a strawberry between them from a rotary distribution drum, and by two retention arms recloseable in order to retain the aforesaid strawberry on the rollers. In order to cut the stalk from the strawberries, pusher arms are provided which are inserted in the cradles by pushing the strawberry contained in each of these towards the outside, in a manner such that the strawberry projects from the cradle and can be cut by a suitable rotary blade. Such destalking machine also results particularly complex in structure and costly to attain.

### Presentation of the invention

In this situation, the problem underlying the present invention is therefore that of eliminating the problems of the abovementioned prior art, by providing a destalking machine that is capable of operating in a completely automated manner and that is simultaneously simple and inexpensive to manufacture.

A further object of the present invention is that of providing a destalking machine, which is entirely reliable in operation.

A further object of the present invention is that of providing a destalking machine, which is capable of removing the stalks from farm products with precision, in particular from strawberries.

A further object of the present invention is that of providing a destalking machine, which is capable of removing the stalks from farm products, in particular from strawberries, reducing the removed pulp part as much as possible.

A further object of the present invention is that of providing a destalking machine, which is capable of processing a large quantity of farm products, in particular strawberries, in reduced time intervals.

### Brief description of the drawings

The technical characteristics of the invention, according to the aforesaid objects, can be clearly seen in the contents of the below-reported claims and the advantages of the same will be more evident in the following detailed description, made with reference to the enclosed drawings, which represent a merely exemplifying and non-limiting embodiment of the invention, in which:
- figure 1 shows a front perspective view of a destalking machine for farm products according to the present invention, in accordance with a preferred embodiment;
- figure 2 shows a rear perspective view of the destalking machine for farm products of figure 1;
- figure 3 shows a front perspective view of the destalking machine of figure 1, from which several parts were removed in order to better show other parts, in particular in order to better show a series of rollers and first movement means of an alignment group;
- figure 4 shows a front perspective view of the destalking machine of figure 1, from which several parts were removed in order to better show other parts, in particular in order to better show second movement means of the alignment group;
- figure 5 shows a front perspective view of the destalking machine of figure 1, from which several parts were removed in order to better show other parts, in particular in order to better show multiple side-by-side series of rollers;
- figure 6 shows a perspective view of the second movement means for the side-by-side series of rollers of the destalking machine of figure 1;

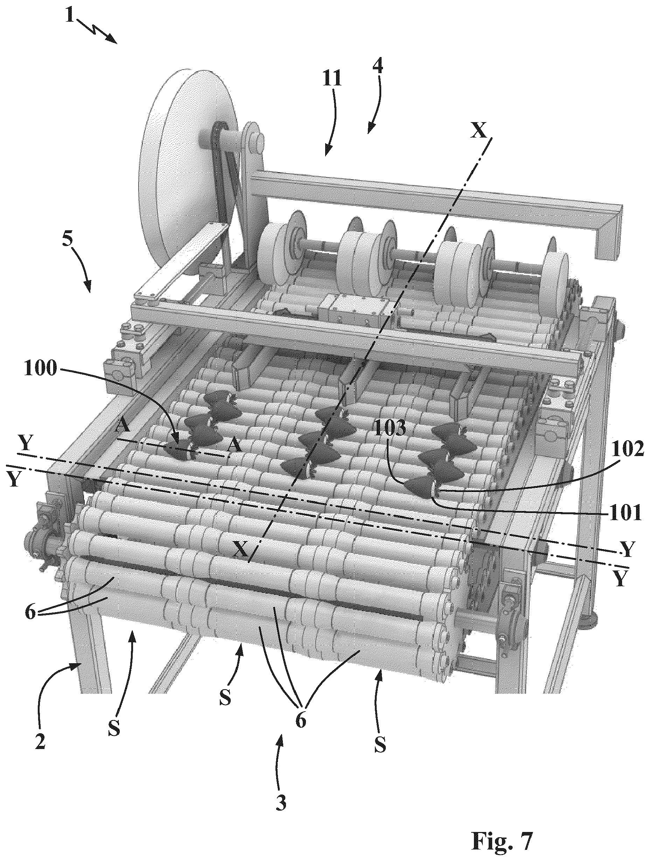

- figure 7 shows a front perspective view of the destalking machine of figure 1, with the farm products placed on the series of rollers;

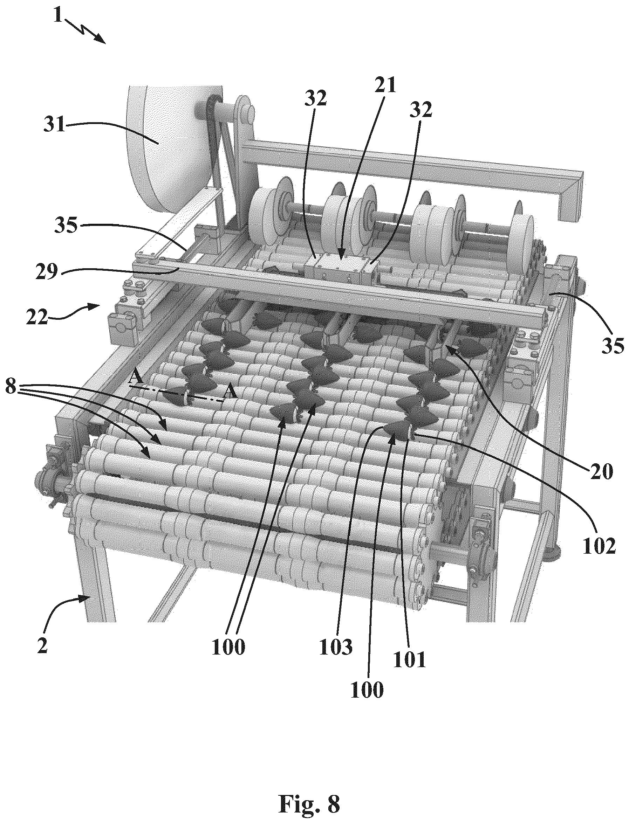

- figure 8 shows a front perspective view of the destalking machine of figure 1, with conveyance bodies of the alignment group placed in a wait position;

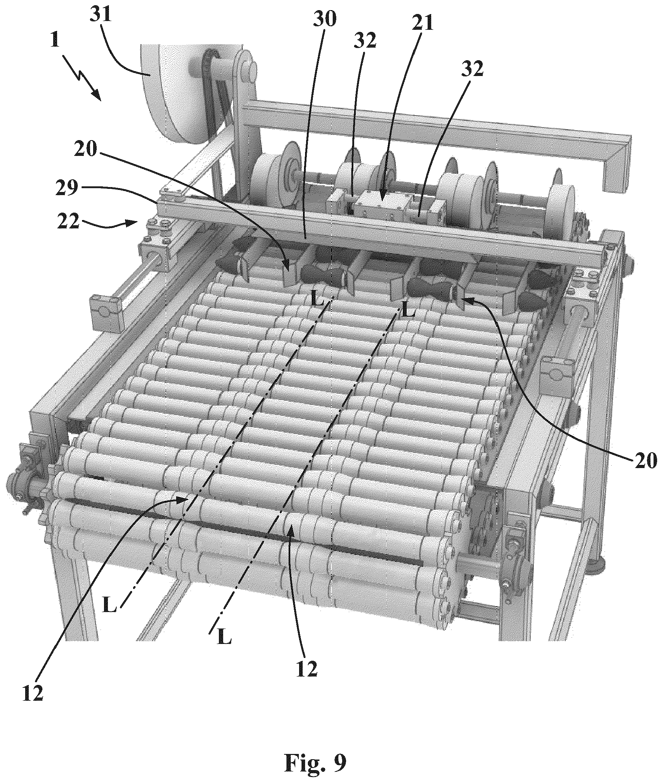

- figure 9 shows a front perspective view of the destalking machine of figure 1, with conveyance bodies of the alignment group placed in an interference position;
- figure 10 shows a top plan view of the destalking machine of figure 1, enlarged in order to better show a destalking group and with the conveyance bodies of the alignment group placed in an interference position;
- figure 11 shows an enlarged top perspective view of the destalking machine of figure 1, with conveyance bodies of the alignment group placed in an interference position.

### Detailed description of a preferred embodiment

With reference to the enclosed figures, reference number 1 overall indicates a destalking machine for farm products 100 according to the present invention.

More in detail, the farm products 100, processable by means of the present destalking machine 1, are extended each along an axis A thereof with shape tapered from an enlarged portion 101, provided with a stalk 102, to a tip portion 103, and such farm products 100 are in particular strawberries.

At any rate, the present destalking machine 1 is not to be considered limited to the destalking of the strawberries, but rather it is adapted to destalk also other farm products 100, as long as they are provided, along a main axis A thereof, with an enlarged portion 101 with stalk 102 and with a tip portion 103, such as for example also radishes or farm products 100 which have a substantially conical shape.

More in detail, the destalking machine 1 according to the invention has particular use in the field of treating farm products and in the food field, such destalking machine 1 being in particular adapted to remove the stalks of the strawberries, in order to prevent or limit, as much as possible, the onset of mold and marcescence and the deterioration of taste, before the strawberries are frozen and packaged in order to be subsequently distributed in supermarkets and points of sale.

The present destalking machine 1 comprises a support frame 2, which is extended, along an advancement direction X, between an inlet section 3, at which said destalking machine 1 is susceptible of receiving farm products 100 to be destalked, and an outlet section 4, at which said destalking machine 1 is susceptible of unloading the destalked farm products 100.

In particular, such advancement direction X is substantially horizontal.

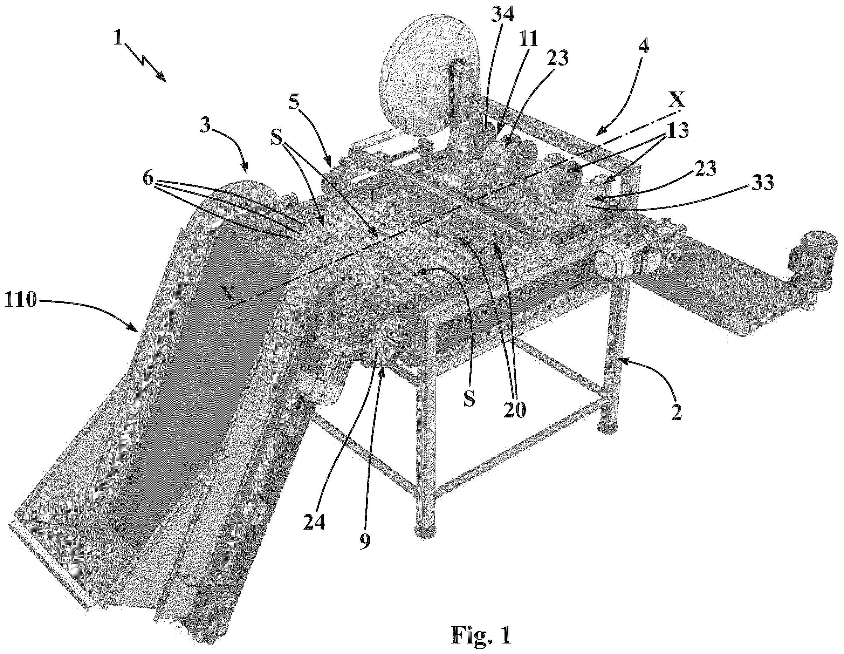

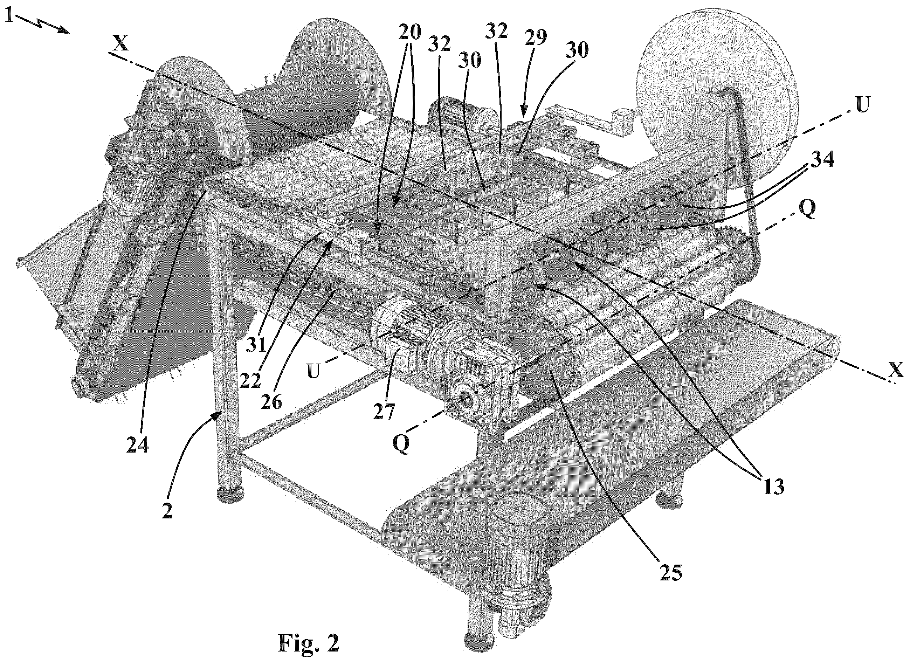

As illustrated in figures 1 and 2, the present machine 1 is advantageously installed with the inlet section 3 placed downstream of a conveyor belt 110, in a manner such to receive the farm products 100 to be destalked from the aforesaid conveyor belt 110.

In addition, the present destalking machine 1 is provided with an alignment group 5 mounted on the aforesaid support frame 2.

Such alignment group 5 comprises at least one series S of rollers 6 side-by-side and parallel to each other, which are extended each, between two opposite ends 7 placed on corresponding sides L of the series S, along a main extension axis Y transverse to the advancement direction X, are guidedly connected to the support frame 2 along the aforesaid advancement direction X and each define, with the adjacent roller 6, a reception seat 8 susceptible of receiving the farm products 100.

In particular, the fact that each roller 6 defines, with the adjacent roller 6, a reception seat 8 signifies that each roller 6 is placed to partially delimit two consecutive reception seats 8 along the advancement direction X.

In particular, the rollers 6 of the series S side-by-side and parallel to each other define a substantially horizontal lying plane and containing the advancement direction X, in a manner such that the farm products 100 can be provided to the alignment group 5 due to falling, e.g. via falling from the conveyor belt 110, above the series S of rollers 6.

More in detail, each reception seat 8 is delimited laterally by lateral surfaces of the two corresponding rollers 6 that are adjacent to each other, is open on the upper part in order to receive the farm products 100 to be destalked and is open on the lower part by a slit, which is defined, similar to the respective reception seat 8, by the aforesaid two adjacent rollers 6, is extended parallel to the main extension axes Y of the rollers 6 and is advantageously sized in a manner such to prevent the fall of the farm products 100 through the side-by-side series S of rollers 6.

In order to prevent the falling of the farm products 100 through the reception seats 8 and the respective slits, each roller 6 of the series S is advantageously spaced by an adjacent roller 6 by a distance smaller than the average size of the farm products 100 to be destalked. For example, each roller 6 of the series S is preferably spaced by the roller 6 adjacent thereto by a distance comprised between 5 mm and 2 cm.

In this manner, the series S of rollers 6 can receive the farm products 100, in particular at the inlet section 3, for example from the conveyor belt 110, without the risk that the farm products 100 which come to be deposited on the rollers 6 and which are inserted in the reception seats 8 can fall from the series S of rollers 6 themselves by crossing the slits.

More in detail, each roller 6 is advantageously spaced, along the advancement direction X, from the preceding roller 6 by a distance equal to that present, along the advancement direction X, with the subsequent roller 6. In this manner, each roller 6 defines, together with the two adjacent rollers 6, two reception seats 8.

The alignment group 5 also comprises first movement means 9 mounted on the support frame 2, mechanically connected to the rollers 6 and arranged for advancing the aforesaid rollers 6 along the advancement direction X in order to transport the farm products 100 towards the outlet section 4.

In addition, the aforesaid alignment group 5 also comprises second movement means 10 mounted on the support frame 2 and arranged for rotating the rollers 6 around their main extension axes Y in a same rotation direction at at least one first operating section W of the advancement direction X.

The destalking machine 1 according to the invention comprises a destalking group 11, which is mounted on the support frame 2, is placed between the first operating section W and the outlet section 4 and is arranged in order to remove the stalk 102 from the farm products 100.

In accordance with an embodiment not illustrated in the enclosed figures, the first movement means 9 of the alignment group 5 comprise a movable frame, which is slidably mounted on the support frame 2 along the advancement direction X and rotatably carries the rollers 6 mounted thereon around their main extension axes Y, and at least one linear actuator, which is mechanically connected to the support frame 2 and to the movable frame and is arranged for translating the aforesaid movable frame between a first position, in which the aforesaid movable frame is placed substantially at the inlet section 3 in order to receive the farm products 100 to be destalked, and a second position, in which the aforesaid movable frame is placed substantially at the destalking group 11 in order to supply the farm products 100 to be destalked thereto.

In order to be able to supply, in the most continuous manner possible, the farm products 100 to the destalking group 11, in accordance with the preferred embodiment illustrated in the enclosed figures, the rollers 6 are guidedly connected to the support frame 2 along a closed circulation path partly extended along the advancement direction X, in a manner such that the rollers 6 are translated by means of the first movement means 9 from the inlet section 3 to the outlet section 4 along the advancement direction X and, once they have substantially reached the outlet section 4, are recirculated by the same first movement means 9 towards the inlet section 3 in order to receive new farm products 100 to be destalked.

In particular, the first movement means 9 of the alignment group 5 comprise at least one first wheel 24 placed substantially at the inlet section 3 and rotatably connected to the support frame 2 around a first rotation axis P parallel to the main extension axis Y of the rollers 6 and at least one second wheel 25 placed substantially at the outlet section 4 and rotatably connected to the support frame 2 around a second rotation axis Q parallel to the main extension axis Y of the rollers. In addition, the first movement means 9 advantageously comprise at least one transport chain 26, which is wound around the first wheel 24 and the second wheel 25, defines the closed circulation path and carries, mounted thereon, the rollers 6 at their ends 7 placed on a same side L of the series S, and at least one actuation motor 27, which is mechanically connected to the support frame 2 and to at least one between the first wheel 24 and the second wheel 25 in order to rotate the latter and drive the rollers 6 along the closed circulation path by means of the transport chain 26.

Preferably, in order to support, in the most stable possible manner, the rollers 6 along the closed circulation path, the first movement means 9 comprise two side-by-side first wheels 24 with their first rotation axes P aligned, two side-by-side second wheels 25 with their second rotation axes Q aligned and two transport chains 26, each of which wound around a respective first wheel 24 and second wheel 25 and carries, mounted thereon, the rollers 26 at their ends 7 placed on a same side L of the series S.

According to the idea underlying the present invention, the rollers 6 of the alignment group 5 have shape that is cylindrical and elongated along the main extension axis Y, defining the reception seats 8 with elongated longitudinal extension between the opposite ends 7 of the rollers 6, in a manner such that the rollers 6, rotated along at least the first operating section W, orient the farm products 100 in the reception seats 8 with the axes A substantially parallel to the main extension axes Y and translate the farm products 100 along the reception seats 8 close to the ends 7 of the rollers 6 towards which the tip portions 103 of the farm products 100 are directed.

More in detail, with the expression "cylindrical shape" referred to the rollers 6, it must be intended hereinbelow that the rollers 6 have shape, in a section orthogonal to the respective main extension axis Y, that is circular and, in addition, constant diameter over the entire the extension along the main extension axis Y between the two ends 7.

In addition, still according to the idea underlying the present invention, the alignment group 5 comprises abutment means 12, which are placed along at least one side L of the series S and adjacent to the corresponding ends 7 of the rollers 6 in order to receive against it the tip portions 103 of the farm products 100. In addition, the destalking group 11 comprises at least one cutting member 13 substantially aligned with the abutment means 12 in order to cut the stalks 102 from the farm products 100 placed with their tip portions 103 against the abutment means 12.

More in detail, in operation, the farm products 100 to be destalked are supplied to the alignment group 5 substantially at the inlet section 3 above the series S of rollers 6, in a manner such that, by gravity, the farm products 100 themselves come to be naturally placed at the reception seats 8 defined by the rollers 6.

Indeed, in particular, the rollers 6 having cylindrical and elongated shape, the reception seats 8 have in turn a shape that is elongated along a direction parallel to the main extension axes Y of the rollers 6 and have shape, on a section perpendicular to the aforesaid main extension axes Y, tapered from the top towards the bottom and, therefore, adapted to receive the farm products 100.

In addition, in operation, the rotation of the rollers 6 around their main extension axes Y along at least the first operating section W requires that the farm products 100 placed in the reception seats 8 with their axes A oriented transverse to the main extension axes Y rotate around directions substantially vertical in order to bring the axes A to be parallel to the reception seats 8 and to the main extension axes Y themselves.

In operation, in addition, the rotation of the rollers 6 around their main extension axes Y along at least the first operating section W requires that the farm products 100 that have their axes A substantially parallel to the reception seats 8 and to the main extension axes Y translate along the corresponding reception seats 8 in the sense in which the tip portions 103 are oriented, i.e. close to the end 7 of the rollers 6 towards which the tip portion 103 is directed.

In addition, the arrangement of the abutment means 12 along at least one side L of the series S of rollers 6 ensures that the farm products 100 (which are made to translate along the reception seats 8 in the direction towards which tip portions 103 are directed, due to the rotation of the rollers 6 around their main extension axes Y) are blocked in a precise position on the series S of rollers 6, i.e. in the reception seats 8 and with the tip portion 103 placed against the abutment means 12 on a side L of the series S of rollers 6.

At this point, in operation, it is sufficient to arrange a cutting member 13 aligned with the abutment means 12 in order to remove the stalks 102 in an automated manner, the position of the farm products 100 being defined in a precise manner and, thus, also the position of the stalks 102 to be removed being defined.

Therefore, advantageously, the arrangement of the rollers 6 with cylindrical shape of the second movement means 10 which rotate the rollers 6, the abutment means 12 and the cutting member 13 aligned with the abutment means 12 allows the precise removal of the stalks 102 from the farm products without having to arrange any viewing system that detects the orientation of the farm products 100 and without requiring the moving and actuating of cutting members as a function of the information generated by the aforesaid viewing system.

In accordance with an embodiment not illustrated in the enclosed figures, the abutment means 12 are placed along only one side L of the series S of rollers 6 and, in addition, the destalking machine 1 is provided with a collection tank placed below the series S of rollers 6 at least at the ends 7 of the rollers 6 on the side where no abutment means 12 are present, and such collection tank is for example coupled to the conveyor belt 110 which feeds, with the farm products 100, the present destalking machine 1 at the inlet section 3.

In this manner, in operation, the farm products 100 aligned within the reception seats 8 with the tip portion 103 directed towards the abutment means 12 are induced, by the rotation of the rollers 6 around their main extension axes Y along at least the first operating section W, to abut against the abutment means 12 themselves in order to then be able to be destalked by the cutting member 13 and, in addition, the farm products 100 with the tip portion 103 directed in opposite direction are induced, by the rotation of the rollers 6, around their main extension axes Y along at least the first operating section W, to translate towards the ends 7 of the rollers 6 where the abutment means 12 are not present in order to fall into the collection tank and then be newly supplied, due for example to the conveyor belt 110, to the alignment group 5.

In accordance with the preferred embodiment illustrated in the enclosed figures, the abutment means 12 are placed on both sides L of said series S of rollers 6 and the destalking group 11 comprises two cutting members 13 placed at the respective sides L of the series S.

In this manner, in operation, both the farm products 100 aligned with the reception seats 8 with their tip portion 103 directed in one direction and the farm products 100 aligned with the reception seats 8 with their tip portion 103 directed in the opposite direction are translated (by the rotation of the rollers 6 around their main extension axes Y along at least the first operating section W) along the reception seats 8 up to abutting with their tip portions 103 against the abutment means 12, which are placed on both sides L of the series S, in a manner such that the cutting members 13 remove the stalks 102 both from the farm products 100 placed against the abutment means 12 on one side L of the series S and from the farm products 100 placed against the abutment means 12 on the other side L.

In order to increase, as much as possible, the quantity of farm products 100, in particular strawberries, which are destalked by means of the present destalking machine 1, nevertheless limiting the costs and the overall bulk of the destalking machine 1, the alignment group 5 advantageously comprises multiple series S of rollers 6, and such series S are side-by-side each other and parallel to the advancement direction X. In addition, advantageously, the abutment means 12 are placed along at least one side L of each series S and adjacent to the corresponding ends 7 of the rollers 6 in order to receive the tip portions 103 of the farm products 100 against them. In addition, the destalking group 11 advantageously comprises at least one cutting member 13 for each series S of rollers 6, and such cutting member 13 is substantially aligned with the abutment means 12 in order to cut the stalks 102 from the farm products 100 placed with their tip portions 103 against the abutment means 12.

In accordance with the preferred embodiment illustrated in the enclosed figures, the alignment group 5 comprises multiple series S of rollers 6 (in particular three series S of rollers 6) side-by-side each other and parallel to the advancement direction X, the abutment means 12 are placed on both sides L of each series S of rollers 6 and the destalking group 11 comprises two cutting members 13 for each series S of rollers 6, and such cutting members 13 are placed at the respective sides L of the series S.

Advantageously, the first operating section W - along which the second movement means 10 rotate the rollers 6 around their main extension axes Y in one same sense - has length along the advancement direction X sized such to ensure that the rotation imparted by the second movement means 10 to the rollers 6 is able to orient the farm products 100 with their axes A parallel to the main extension directions Y and to translate the aforesaid farm products 100 up to reaching the ends 7 of the rollers 6, i.e. up to abutting with their tip portions 103 against the abutment means 12.

In particular, the extension of the first operating section W along the advancement direction X depends on the rotation speed that the second movement means 10 are arranged for imparting to the rollers 6 and on the execution of the same rollers 6 between the corresponding ends 7 along their main extension axes Y. More in detail, indeed, the higher the rotation speed of the rollers 6 around their corresponding main extension axis Y and the shorter the extension of the rollers 6 along their corresponding main extension axis Y, the more reduced the extension of the first operating section W can be so that the rotation of the rollers 6 is able to place the farm products 100 with their axis A parallel to the main extension axes Y and able to translate the farm products 100 up to the ends 7 of the rollers 6. At any rate, it is advantageous that the second movement means 10 are arranged for rotating the rollers 6 around their main extension axes Y with a rotation speed lower than a pre-established maximum limit, and such maximum limit is calibrated in a manner such that the rotating rollers 6 do not risk pinching and damaging the farm products 100 and do not risk overthrowing the farm products 100 themselves from the series S of rollers 6. In addition, it is advantageous that the rollers 6 have extension along their main extension axes Y between the ends 7 equal at least to three times the average length of the farm products 100 along their axis A, in a manner such that there is sufficient space between the ends 7 for each farm product 100 to be aligned with the corresponding reception seat 8 and so that the cutting members 13 placed on the two sides L of the series S do not risk operating on a same farm product 100. For example, the rollers 6 have extension along their main extension axes Y between their corresponding ends 7 at least equal to 10 cm and, preferably, at least equal to 12 cm.

Advantageously, the first operating section W is extended along the advancement direction X between an initial point I, at which the rollers 6 are rotated around their main extension axis Y by the second movement means 10, and a final point F, at which the rollers 6 stop rotating. In addition, such first operating section W can be extended, in particular between the aforesaid initial point I and the final point F, along the advancement direction X from the inlet section 3 up to the destalking group 11 or can terminate, in particular with its final point F, upstream of the destalking group 11 and spaced therefrom.

In accordance with an embodiment not illustrated in the enclosed figures, the abutment means 12 are fixed to the support frame 2. For example, such fixed abutment means 12 comprise an abutment wall extended along the advancement direction X between the inlet section 3 and the outlet section 4 adjacent to the ends 7 of the rollers 6 placed on at least one side L of the series S and, in particular, comprise an abutment wall for each side L.

In order to reduce the risk that the farm products 100 can exit from the reception seats 8 due to the reaction forces that are extended at the tip portion 103 in contact with the abutment wall of the fixed abutment means 12 when the rollers 6 translate along the advancement direction X, the abutment wall of the abutment means 12 is made of a material with low friction coefficient, in a manner such to facilitate the sliding of the tip portions 103 of the farm products 100.

Otherwise, in accordance with the preferred embodiment, the abutment means 12 comprise multiple abutment bodies 14, each of which placed at a respective end 7 of a corresponding roller 6 and arranged for advancing together with the corresponding roller 6 along at least the advancement direction X, and preferably along the entire closed circulation path.

In particular, the arrangement of abutment bodies 14 movable together with the rollers 6 substantially cancels the risk that the farm products 100, after having moved within the reception seats 8 in order to abut with their tip portion 103 against the abutment means 12, can exit from the reception seats 8 themselves.

Indeed, in operation, the fact that the abutment bodies 14 advance together with the corresponding rollers 6, and hence with the same velocities and accelerations, ensures that forces are not imparted by the rollers 6 and by the abutment means 12 to the farm products 100 that tend to rotate the same farm products 100 around vertical directions, unlike the case in which there are rollers 6 in motion along the advancement direction X and abutment means 12 fixed to the support frame 2 that exert reaction forces against the tip portions 103 of the farm products 100 transported by the rollers 6 themselves.

Advantageously, the abutment bodies 14 have substantially frustoconical shape and are extended tapered along the main extension axis Y of the respective roller 6 each between an enlarged base 15, which is placed spaced from the respective end 7 of the corresponding roller 6, and an opposite narrow base 16, which is placed adjacent to the end 7 of the corresponding roller 6 and has diameter substantially smaller than or equal to that of the corresponding roller 6.

More in detail, such substantially frustoconical shape of the abutment bodies 14 with narrow base 16 adjacent to the end 7 of the respective roller 6 facilitates the ascent at least of the tip portion 103 of the farm products 100 above the same abutment bodies 14.

Indeed, in operation, the rotation of the rollers 6 around their main extension axes Y along the first operating section W translates the farm products 100 within the reception seats 8 up to reaching, with the tip portions 103, the abutment bodies 14. In operation, when the tip portions 103 reach the abutment bodies 14, the enlarged portions 101 of the farm products 100 are still placed in the reception seats 8 between the rollers 6 and, therefore, the rotation of the rollers 6 continues to push the farm products 100 themselves at least at the enlarged portion 101 such that the tip portion 103 ascends on the sides of the two abutment bodies 104 corresponding to the two adjacent rollers 6 which delimit the reception seat 8 in which the enlarged portion 101 is still situated.

Advantageously, the rollers 6 of the series S are guidedly connected to the support frame 2 along the advancement direction X and are idly rotatable around the main extension axis Y thereof and, in addition, the second movement means 10 comprising at least one friction element 19 placed at least along the first operating section W and adapted to come into contact with the rollers 6 which advance on the first operating section W in order to rotate the aforesaid rollers 16 around the corresponding main extension axes Y.

Preferably, the friction element 19 is placed below the rollers 6 at the first operating section W, in a manner such that the friction element 19 itself does not interfere with the farm products 100 that are placed on the rollers 6 of the series S.

In particular, the friction element 19 is placed within the closed circulation path at the first operating section W.

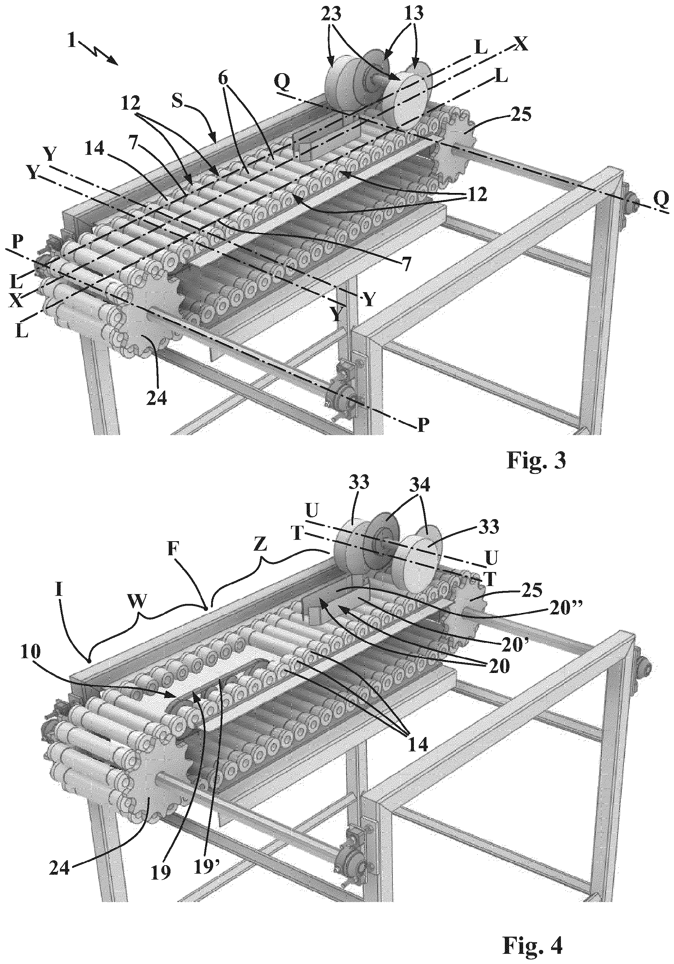

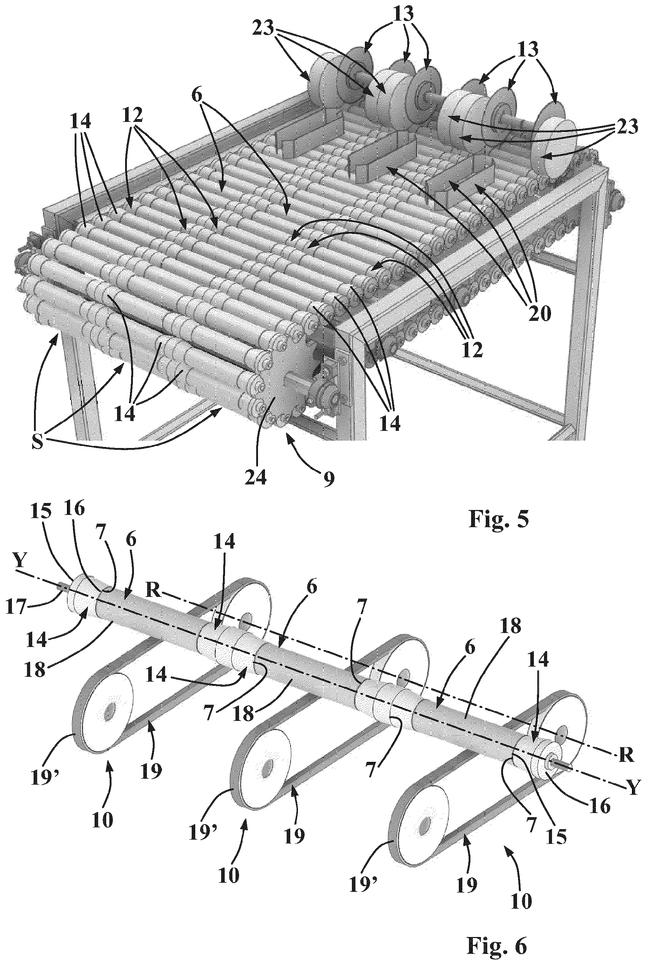

In accordance with the preferred embodiment, as illustrated in figures 4 and 6, the friction element 19 comprises a belt 19' and, in addition, the second movement means 10 comprise at least two actuation wheels 28, which are rotatable around a corresponding third rotation axes R parallel to the main extension axes of the rollers 6 and carry wound around themselves the aforesaid belt 19', and a fifth actuator member (not illustrated), which is mechanically connected to at least one of the actuation wheels 28, is arranged for rotating it around its corresponding third rotation axis R and is preferably mounted on the support frame 2.

Otherwise, in accordance with an embodiment not illustrated in the enclosed figures, the friction element 19 comprises a fixed obstacle adapted to come into contact with the rollers 6 which advance on the first operating section W. In such case, in operation, the rollers 6 are rotated only by the friction that is extended when they come into contact with the aforesaid fixed obstacle during their translation along the advancement direction X from the inlet section 3 towards the destalking group 11 and, therefore, in the aforesaid case, the rotation speed of the rollers 6 around their main extension axis Y only depends on the advancing speed of the rollers 6 along the advancement direction X (such advancing speed is imparted to the rollers 6 by the first movement means 9) and on the diameter of the same rollers 6.

In accordance with the preferred embodiment, the first movement means 9 advantageously comprise a support shaft 17 for each roller 6 of the series S of rollers 6, and such support shaft 17 is extended along the main extension axis Y of the corresponding roller 6 and is guidedly connected to the support frame 2 along the advancement direction X in order to be able to advance the corresponding roller 6 along the aforesaid advancement direction X.

In addition, each roller 16 advantageously comprises a sleeve 18, which is idly mounted on the corresponding support shaft 17, has substantially cylindrical shape and is extended along the main extension axis Y between the two ends 7.

More in detail, the sleeve 18 is traversed along the main extension axis Y by a mounting opening, within which the corresponding support shaft 17 is inserted.

In particular, each support shaft 17, advantageously, projects laterally with respect to the corresponding sleeve 18 and, preferably, is mechanically connected to the above-described transport chains 26, in a manner such that the sleeve 18 of each roller 6 is guidedly connected to the support frame 2 at least along the advancement direction X (and in particular along the entire closed circulation path) through the respective support shaft 17, the transport chains 26 and the first and second wheels 24, 25 of the first movement means 9.

In addition, preferably, the friction element 19 of the second movement means 10 (which is advantageously placed at least along the first operating section W) is adapted to come into contact with the sleeves 18 of the rollers 6 which advance on the first operating section W in order to rotate the aforesaid sleeves 18 around their main extension axes Y with respect to the corresponding support shafts 17.

More in detail, the support shafts 17 are therefore capable of transporting and advancing the sleeves 18 of the rollers 6 along the advancement direction X and the friction element 19 of the second movement means 10 is capable of rotating the sleeves 18 around their corresponding support shafts 17.

In addition, the abutment bodies 14 are advantageously fixed to the corresponding support shaft 17, which is rotatably blocked with respect to the rotations around the main extension axis Y.

In this manner, when the farm products 100 reach the aforesaid abutment bodies 14 having frustoconical shape and at least partly ascend with their tip portion 103 on such abutment bodies 14, the farm products 100 are situated placed against the components which, unlike the rollers 6, are not rotatable and that therefore prevent a further translation of the farm products 100 themselves by maintaining them in a precise position.

In accordance with the preferred embodiment, each support shaft 17 carries, rotatably and idly mounted, multiple sleeves 18 side-by-side along their main extension axis Y, in which each sleeve 18 belongs to one of the series S of rollers 6 side-by-side each other. In addition, advantageously, between the sleeves 18 that are rotatably mounted in an idle manner on a same support shaft 17 of the first movement means 9, the abutment bodies 14 of the abutment means 12 are interposed, and such abutment means 12 are placed on each side L of each of the series S of rollers 6. Therefore, in particular, between two adjacent sleeves 18 placed on a same support shaft 17, two abutment bodies 14 are interposed, one placed at the side L of the series S of rollers 6 to which a sleeve 18 belongs and the other placed at the side L of the series S of rollers 6 to which the other sleeve 18 belongs.

In accordance with a different embodiment not illustrated in the enclosed figures, the rollers 6 do not comprise a sleeve 18 and the first movement means 9 do not comprise the support shafts 17, rather the rollers 6 comprise a cylindrical main body, which is extended along the main extension axis Y between the opposite ends 7, and two support pins, which are made in a single piece with the cylindrical main body, are extended in turn along the main extension axis Y, project with respect to the ends 7 and are rotatably connected in an idle manner to the transport chains 26.

Advantageously, the alignment group 5 comprises at least one conveyance body 20 extended along the advancement direction X above the series S of rollers 6, positioned between at least part of the first operating section W and the destalking group 11, and placed at least in an interference position, in which the aforesaid conveyance body 20 is placed at a respective side L of the series S of rollers 6 (i.e. in particular the side L at which are placed the abutment means 12) and is susceptible of intercepting the farm products 100 in order to push such farm products 100 against the abutment means 12, in particular against the abutment bodies 14 of the abutment means 12.

More in detail, with the expression "positioned between at least part of the first operating section W and the destalking group 11" referred to the conveyance body 20, it must be intended that the conveyance body 20 is placed (with reference to the advancing sense of the rollers 6 from the inlet section 3 towards the outlet section 4) downstream of the initial point I of the first operating section W, is spaced from the aforesaid initial point I and is placed upstream of the destalking group 11. Therefore, hereinbelow it must be intended that the conveyance body 20 can also be subjected in part or completely to a portion of the first operating section W, as long as the aforesaid conveyance body 20 is spaced from the initial point I of the aforesaid first operating section W. In this manner, unlike the case in which the first operating section W terminates upstream of the destalking group 11 and spaced from the latter or the case in which the first operating section W is extended along the advancement direction X from the inlet section 3 to the destalking group 11, the conveyance body 20 is capable of intercepting farm products 100 which, due to the rotation of the rollers 6 imparted by the second movement means 10, have already been aligned with their axis A with the reception seats 8 and have been translated at least for a brief distance along the aforesaid reception seats 8 close to the ends 7 towards which the tip portions 103 are directed.

In accordance with the preferred embodiment illustrated in the enclosed figures, the first operating section W terminates (with reference to the advancing sense of the rollers 6 from the inlet section 3 to the outlet section 4) upstream of the destalking group 11 and is spaced from the latter (i.e. in particular the final point F of the first operating section W is placed upstream of the and spaced from the destalking group 11) and, in addition, the conveyance body 20 is interposed between the first operating section W and the destalking group 11 without being superimposed on the first operating section W.

Advantageously, the aforesaid conveyance body 20 is extended mainly parallel to the advancement direction X. Preferably, the conveyance body 20 comprises a conveyance wall 20', which is extended substantially parallel to the advancement direction X, and an introduction wall 20", which is connected to the aforesaid conveyance wall 20' and is tilted with respect to the conveyance wall 20' and with respect to the advancement direction X, so as to be able to also intercept the farm products 100 that have not yet arrived with their tip portion 103 against the abutment means 12 and thus guide them towards the aforesaid abutment means 12.

Preferably, the tilted introduction wall 20" of the conveyance body 20 has extension along the advancement direction X smaller than the extension of the conveyance wall 20' along the same advancement direction X.

Advantageously, in interference position (where the conveyance body 20 is placed at the side L), the conveyance body 20 (in particular the conveyance wall 20' of the conveyance body 20) is spaced from the ends 7 of the rollers 6, placed on the side L at which the abutment means 12 are present, by a distance slightly greater than the average length of the stalk 102 to be removed from the farm products 100, i.e. for example by a distance substantially comprised between 0.5 and 2 cm.

In this manner, the conveyance body 20 is capable of pushing, above the abutment bodies 14, the farm products 100 that have reached the abutment means 12 following the rotation of the rollers 6, making the farm products 100 ascend the aforesaid abutment bodies 14 not only with the tip portion 103 but also with the enlarged portion 101. Indeed, more in detail, the rotation of the rollers 6 is capable of making the farm products 100 ascend only with their tip portion 103 on the abutment bodies 14 having substantially frustoconical shape, and it is necessary to have the conveyance body 20 in order to overcome the force of gravity and guide the farm products 100 to ascend also with their enlarged portion 101 on the same abutment bodies 14.

In addition, the cutting member 13 of the destalking group 11 (which is substantially aligned with the abutment means 12) is advantageously placed at the ends 7 of the rollers 6 placed on the side L of the series S at which the abutment means 12 are present.

In this manner, the conveyance body 20 allows removing the stalk 102 from the farm products 100 with high precision, i.e. reducing as much as possible the pulp part that is removed together with the stalk 102, regardless of the overall size of each farm product 100. Indeed, more in detail, the substantially frustoconical shape of the abutment bodies 14 tends to make the farm products 100 fall by gravity towards the rollers 6, while the conveyance body 20, in interference position, maintains the farm products 101 with their tip portion 103 and their enlarged portion 101 on the abutment bodies 14 but, advantageously being spaced in interference position by a distance substantially comprised between 0.5 and 2 cm from the ends 7 placed on the respective side L, allows projecting the stalk 102 from the aforesaid abutment bodies 14, such stalk placed in abutment against the conveyance element 20 itself. In addition, in operation, the cutting member 13, advantageously placed at the ends 7 of the rollers 6, removes the stalk 102 which projects with respect to the abutment bodies 14 and which is maintained in position by the conveyance body 20, reducing as much as possible therefore the damaged pulp part of the enlarged portion 101 of the farm products 100, such enlarged portion 101 maintained above the abutment bodies 14.

In addition, the abutment means 12 are advantageously placed on both sides L of each series S of rollers 6 (as described above) and, preferably, the alignment group 5 comprises two conveyance bodies 20 for each series S of rollers 6, i.e. in particular comprises a conveyance body 20 for each side L of a same series S of rollers 6. In this manner, the two conveyance bodies 20 (for each series S of rollers 6) in interference position are able to push the farm products 100 on the abutment means 12 placed on both sides L of the same series S of rollers 6.

Advantageously, the alignment group 5 comprises actuator means 21 connected to the at least one conveyance body 20 and arranged for moving the aforesaid conveyance body 20 transverse (in particular orthogonal) to the advancement direction X between a wait position, in which it is spaced from the corresponding side L of the series S of rollers 6 (i.e. in particular the side L at which are placed the abutment means 12), and the aforesaid interference position, in which it is carried to the aforesaid side L in order to push the farm products 100 on the abutment means 12, in particular on the abutment bodies 14 of the abutment means 12.

In this manner, the conveyance body 20, by moving from the wait position to the interference position, is capable of safely and effectively pushing - above the abutment bodies 14 - the farm products 100 that have reached the abutment means 12 following the rotation of the rollers 6, making the farm products 100 ascend on the aforesaid abutment bodies 14 both with the tip portion 103 and with the enlarged portion 101.

Preferably, the actuator means 21 of the alignment group 5 are connected to both the conveyance bodies 20 of the same series S of rollers 6 and are arranged for moving both the conveyance bodies 20 between a collected configuration, in which both conveyance bodies 20 are placed in wait position and hence both spaced from the respective sides L of the series S, and an extended configuration, in which both conveyance bodies 20 are placed in interference position and hence both placed at the corresponding side L of the same series S, so as to push the farm products 100 on the abutment bodies 14 of the abutment means 12 placed on both sides L of the series S.

Advantageously, the conveyance wall 20' of each conveyance body 20 is provided with a thrust surface, which is placed in order to act against the farm products 100 and is directed towards the side L of the series S at which the actuator means 21 are arranged in order to carry the same conveyance body 20, and an opposite non-operative surface.

In particular, in the collected configuration, the conveyance bodies 20 of a same series S of rollers 6 are placed at a distance from the corresponding sides L greater than that at which they are placed in interference position and are placed with the non-operative surfaces of their conveyance walls 20' facing and approached to each other.

By means of the actuator means 21 and the two conveyance bodies 20 for each series S of rollers 6, it is advantageously possible to push the farm products 100 completely, both with the tip portion 103 and with the enlarged portion 101, on the abutment means 12 which are placed along both sides L of the same series S.

In addition, the alignment group 5 advantageously comprises third movement means 22 mounted on the support frame 2, mechanically connected to the at least one conveyance body 20 and arranged for translating the aforesaid at least one conveyance body 20 parallel to the advancement direction X at least along a second operating section Z of the advancement direction X placed between at least part of the first operating section W and the destalking group 11.

In particular, the third movement means 22 are connected to both conveyance bodies 20 of a same series S of rollers 6 and are arranged for translating the aforesaid conveyance bodies 20 parallel to the advancement direction X along the second operating section Z of the advancement direction X.

More in detail, with the expression "placed between at least part of the first operating section W and the destalking group 11" referred to the second operating section Z it must be intended that the second operating section Z is placed downstream of the initial point I of the first operating section W, is spaced from the aforesaid initial point I and is placed upstream of the destalking group 11. Therefore, hereinbelow it must be intended that the second operating section Z, along which the conveyance body 20 is susceptible of being translated by the third movement means 22, it can also be partly or completely superimposed on a portion of the first operating section W, as long as the aforesaid second operating section Z (and hence also the conveyance body 20 susceptible of translating along the latter) is spaced from the initial point I of the aforesaid first operating section W. In this manner, the conveyance body 20 susceptible of translating along the second operating section W will always intercept farm products 100 which, due to the rotation of the rollers 6 imparted by the second movement means 10, have already been aligned with their axis A with the reception seats 8 and have already been translated at least for a brief distance along the aforesaid reception seats 8 close to the ends 7 towards which the tip portions 103 are directed.

In accordance with the preferred embodiment illustrated in the enclosed figures, the first operating section W terminates (with reference to the advancing sense of the rollers 6 from the inlet section 3 to the outlet section 4) upstream of the destalking group 11 and is spaced from the latter (i.e. in particular the final point F of the first operating section W is placed upstream of and spaced from the destalking group 11) and, in addition, the second operating section Z, along which the conveyance body 20 can translate, is interposed between the first operating section W and the destalking group 11 without being superimposed on the first operating section W.

Preferably, the third movement means 22 are arranged for translating the at least one conveyance body 20 parallel to the advancement direction X along the second operating section Z with an outgoing travel, in which the third movement means 22 advance the aforesaid conveyance body 20 towards the destalking group 11 with advancing speed equal to the advancing speed of the rollers 6 from the inlet section 3 towards the outlet section 4, and with a return travel, in which the third movement means 22 retract the aforesaid conveyance body 20 in the opposite sense with respect to the outgoing travel, moving it away from the destalking group 11.

In particular, the third movement means 22 are arranged for translating both conveyance bodies 20 parallel to the advancement direction X along the second operating section Z with the outgoing travel and with the return travel.

In this manner, in operation, after each conveyance body 20 has been moved by the actuator means 21 from the wait position to the interference position in order to push the farm products 100 on the abutment means 12 of the corresponding side L, the conveyance bodies 20 are translated by the third movement means 22 with outgoing travel along the second operating section Z, in a manner such that the conveyance bodies 20, traveling together with the rollers 6 and with the same advancing speed of the rollers 6, accompany the farm products 100 placed on the abutment means 12 up to the destalking group 11. In addition, in operation, after the conveyance bodies 20 have completed the outgoing travel accompanying the farm products 100 to the destalking group 11, the conveyance bodies 20 are brought back to collected configuration by the actuator means 21 and are translated by the third movement means 22 with return travel along the second operating section Z, in a manner such that the conveyance bodies 20 themselves, being moved away from the destalking group 11 and moved close to the inlet section 3, are able to intercept new farm products 100 to be destalked that must be thrust against the abutment means 12 and accompanied up to the destalking group 11.

Advantageously, the alignment group 5 comprises a translating frame 29 slidably mounted along the advancement direction X, in particular along the second operating section Z of the advancement direction X, on the support frame 2, in particular by means of translation guides 35, and carries mounted thereon, in a movable manner, the conveyance bodies 20 of each of the series S of rollers 6. In particular, the third movement means 22 comprise a first actuator member 31 mechanically connected to the support frame 2 and to the translating frame 29 and arranged for moving the translating frame 29 along the advancement direction X, in a manner such to translate the conveyance bodies 20 along the advancement direction X.

Such first actuator member 31 can for example be a cam mechanism, which is actuatable by means of a corresponding motor (which can also be the actuation motor 27 of the first movement means 9) and is arranged for translating the aforesaid translating frame 29 parallel to the advancement direction X along the second operating section Z, in particular with outgoing travel having the same advancing speed of the rollers 6 and with return travel in opposite sense with respect to the outgoing travel. Otherwise, the first actuator member 31 can be a pneumatic or hydraulic linear actuator.

Preferably, the actuator means 21 are mounted on the aforesaid translating frame 29 and are arranged for moving the conveyance bodies 20 between their wait position and their interference position. More in detail, such actuator means 21 comprise at least one second actuator member 32, e.g. pneumatic or hydraulic linear actuator, mechanically connected to the translating frame 29 and to at least one corresponding conveyance body 20 and arranged for moving at least the aforesaid corresponding conveyance body 20 between the wait position and the interference position.

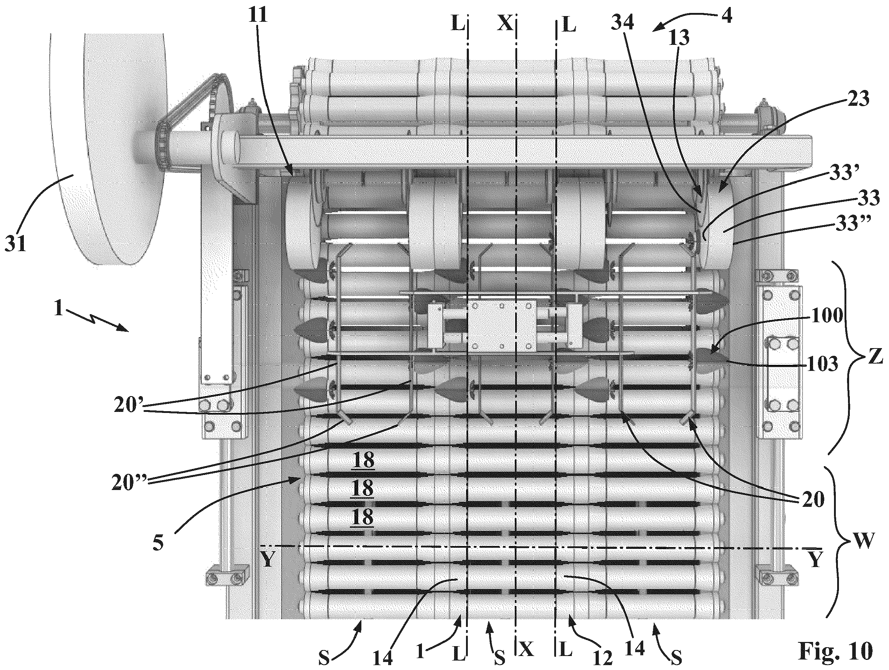

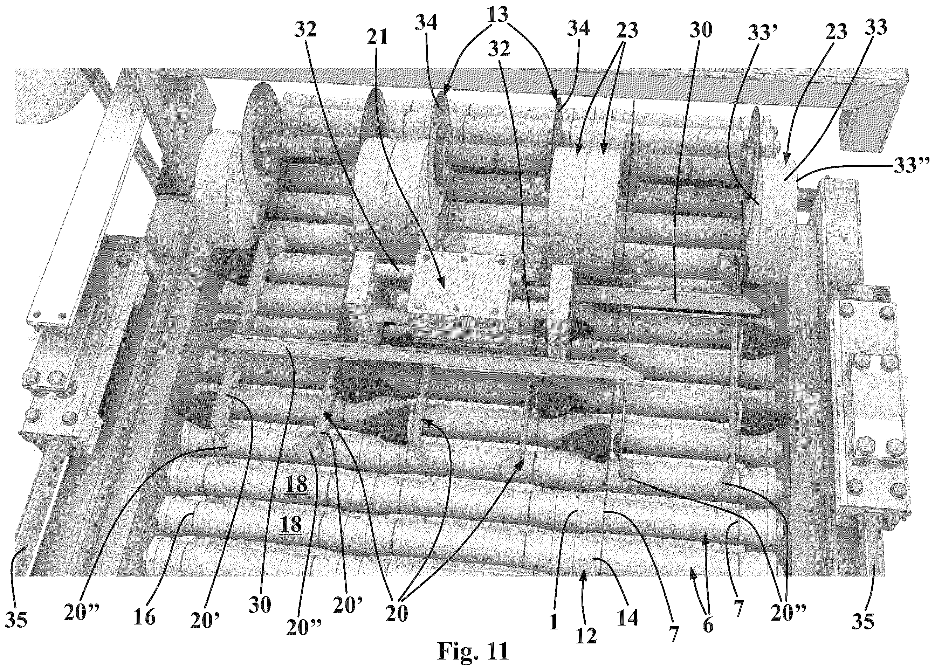

In particular, the actuator means 21 can comprise a second actuator member 32 for each conveyance body 20 of each series S of rollers 6, so as to be able to actuate the conveyance bodies 20 of each series S of rollers 6 between the wait position and the interference position in an independent manner with respect to the conveyance bodies 20 of the other series S of rollers 6. Or, as illustrated in figures 10 and 11, in order to simplify the present destalking machine 1 and reduce the overall number of its components, the actuator means 21 can comprise two second actuator members 32, including a second actuator member 32 is connected, by means of a corresponding mounting bracket 30, to the conveyance bodies 20 of the different series S of rollers 6 that have their thrust surfaces directed in a same direction and the other second actuator member 32 is connected, by means of a corresponding mounting bracket 30, to the conveyance bodies 20 of the different series S of rollers 6 that have their thrust surfaces directed in opposite direction. In this manner, with only two second actuator members 32, the actuator means 21 are capable of simultaneously carrying the conveyance bodies 20 of all the series S of rollers 6 from the collected configuration to the extended configuration and from the extended configuration to the collected configuration.

In operation, the actuation of the actuator means 21 allows the movement of the conveyance bodies 20 from the wait position to the interference position in order to make the farm products 100 ascend also with their enlarged portion 101 and not only with the tip portion 103 on the abutment bodies 14 of the abutment means 12 and, following the switch from the wait position to the interference position, the actuation of the third movement means 22 ensures that the conveyance bodies 20 accompany along the advancement direction X, in particular along the second operating section Z, the aforesaid farm products 100 towards the destalking group 11, in particular with an outgoing travel having the same advancing speed of the rollers 6 from the inlet section 3 towards the outlet station 4, hence without risking that the farm products 100 can take on incorrect positions with respect to the abutment bodies 14 of the abutment means 12.

Advantageously, the destalking group 11 comprises at least one positioning member 23 at least partially side-by-side the cutting member 13 and placed above the abutment means 12 in order to maintain the farm products 100 to be destalked in position with respect to the abutment means 12 at least when the aforesaid farm products 100 come into contact with the aforesaid cutting member 13.

Preferably, the destalking group 11 comprises two positioning members 23 for each series S of rollers 6, in a manner such that the farm products 100 at the abutment means 12 which are placed on both sides L of a same series S can be maintained in position at least when they enter in correspondence with the cutting member 13 placed aligned with the corresponding side L.

In accordance with the preferred embodiment, each positioning member 23 comprises a positioning wheel 33 placed above the abutment bodies 14 of the abutment means 12 placed along the corresponding side L, and such positioning wheel 33 is rotatable around a fourth rotation axis T parallel to the main extension axes Y of the rollers 6. In addition, the destalking group 11 advantageously comprises a third actuator member (not illustrated) mechanically connected to such positioning wheel 33 and arranged for rotating it around its fourth rotation axis T.

Advantageously, such positioning wheel 33 is provided with at least one deformable external layer (e.g. made of silicone), which is susceptible of being deformed when the farm products 100 pass on the abutment body 14 below the positioning wheel itself, in a manner such that the aforesaid deformable external layer allows the passage of the farm products 100 and simultaneously exerts a pressure thereon that maintains them in position on the abutment bodies 14, preventing the farm products 100 themselves from being overthrown when they come into contact with the cutting member 13.

Otherwise, the positioning wheel 33 is provided with cavities equally distributed around the fourth rotation axis T and each sized for containing a single farm product 100 to be destalked. In addition, the third actuator member of the destalking group 11 is advantageously arranged for rotating the positioning wheel 33 of the positioning member 23 around the fourth rotation axis T in a manner such that the passage of the cavities made thereon is synchronized with the passage of the reception seats 8.

Therefore, advantageously, when a farm product 100 set on two adjacent abutment bodies 14 approaches the positioning member 23, the positioning wheel 33 rotates around its fourth rotation axis T, carrying a cavity to the space delimited by the two abutment bodies 14 on which the farm product 100 is set, in a manner such that the cavity at its interior receives the farm product 100 without risking damage to it and safely maintaining it in position when it comes into contact with the corresponding cutting member 13.

Otherwise, the positioning wheel 33 is provided both with an deformable external layer (e.g. made of silicone) and with cavities equally distributed around the fourth rotation axis T and made on the aforesaid deformable external layer.

Preferably, the positioning wheel 33 of the positioning member 23, both in the event in which comprises the deformable external layer and in the event in which comprises the cavities equally distributed around the fourth rotation axis T, is provided with a first face 33' directed towards the corresponding conveyance body 20 and with a second face 33" opposite the first face 33', such first face 33' spaced from the aforesaid conveyance body 20 in interference position by an interval slightly greater than the average length of the stalks 102 to be removed. For example, such interval extended between the first face 33' of the positioning wheel and the conveyance body 20 in interference position is substantially comprised between 5 mm and 2 cm.

In this manner, when the farm product 100 transported by the abutment bodies 14 of the abutment means 12 pass beneath the positioning wheel 33 of the positioning member 23, the stalk 102 and possibly a part of the enlarged portion 101 of the farm product 100 itself project from the first face 33' of the positioning wheel, in a manner such that the cutting member 13 can easily cut the stalk 102 and possibly part of the enlarged portion 101 without interfering with the positioning member 23.

In addition, each cutting member 13 of the destalking group 11 advantageously comprises a blade 34.

Preferably, such blade 34 is placed side-by-side the first face 33' of the positioning wheel 33 of the positioning member 23 and is parallel to the aforesaid first face 33', in a manner such that it can cut the stalk 102 and the entire part of the enlarged portion 101 of the farm product 100 that projects with respect to the first face 33' of the positioning wheel 33.

In accordance with the preferred embodiment illustrated in the enclosed figures, the blade 34 is circular, is extended a plane orthogonal to the main extension axes Y of the rollers 6 and is rotatable around a fifth rotation axis U parallel to the aforesaid main extension axis Y. Preferably, the destalking group 11 comprises a fourth actuator member mechanically connected to such blade and arranged for rotating it around its fifth rotation axis U.

In accordance with a different embodiment not illustrated in the enclosed figures, the blade 34 is alternately movable along a direction moving close and away from the abutment means 12 and in a synchronized manner with the passage of the reception seats 8.

Also forming an object of the present invention is a method for destalking farm products executed by means of a destalking machine 1.

Such method provides for a loading step, in which the farm products 100 to be destalked are supplied to the alignment group 5 at the inlet section 3 (such farm products 100 are for example supplied via falling from a conveyor belt 110 on the series S of rollers 6), being placed in the reception seats 8 defined by the rollers 6.

An alignment step is also provided for, in which the rollers 6, actuated by the first movement means 9, advance along the advancement direction X from the inlet section 3 to the outlet section 4 and are actuated to rotate, along the first operating section W, by the second movement means 10, such that the rotating rollers 6 place the farm products 100 with their axes A substantially parallel to the main extension axes Y and advance the farm products 100 along the reception seats 8 close to the ends 7 of the rollers 6 towards which the tip portions 103 are directed up to the abutment means 12.

Finally, the present method comprises a destalking step, in which the cutting member 13 of the destalking group 11 removes the stalks 102 from the farm products 100 placed with their tip portions 103 against the abutment means 11.

The invention thus conceived therefore attains the pre-established objects.

## Claims

1. Destalking machine (1) for farm products (100), wherein each farm product (100) is extended along an axis (A) thereof with shape tapered from an enlarged portion (101), provided with a stalk (102), to a tip portion (103); said destalking machine (1) comprising:
- a support frame (2) which is extended, along an advancement direction (X), between an inlet section (3), at which said destalking machine (1) is susceptible of receiving farm products (100) to be destalked, and an outlet section (4), at which said destalking machine (1) is susceptible of unloading said destalked farm products (100);
- an alignment group (5), which is mounted on said support frame (2) and comprises:
- at least one series (S) of rollers (6) side-by-side and parallel to each other, which are extended, each, between two opposite ends (7) placed on corresponding sides (L) of said series (S), along a main extension axis (Y) transverse to said advancement direction (X), are guidedly connected to said support frame (2) along said advancement direction (X), and each define, with said adjacent roller (6), a reception seat (8) susceptible of receiving said farm products (100);
- first movement means (9) mounted on said support frame (2), mechanically connected to said rollers (6) and arranged for advancing said rollers (6) along said advancement direction (X) in order to transport said farm products (100) towards said outlet section (4);
- second movement means (10) mounted on said support frame (2) and arranged for rotating said rollers (6) around their main extension axes (Y) in a same rotation direction at at least one first operating section (W) of said advancement direction (X);
- a destalking group (11), which is mounted on said support frame (2), is placed between said first operating section (W) and said outlet section (4) and is arranged for removing the stalk (102) from said farm products (100);
said destalking machine (1) being **characterized in that** the rollers (6) of said alignment group (5) have shape that is cylindrical and elongated along said main extension axis (Y), defining said reception seats (8) with elongated longitudinal extension between the opposite ends (7) of said rollers (6), such that said rollers (6), rotated along at least said first operating section (W), orient said farm products (100) in said reception seats (8) with said axes (A) substantially parallel to said main extension axes (Y) and translate said farm products (100) along said reception seats (8) close to the ends (7) of said rollers (6) towards which the tip portions (103) of said farm products (100) are directed;
said alignment group (5) comprising abutment means (12) placed along at least one said side (L) of said series (S) and adjacent to the corresponding ends (7) of said rollers (6) in order to receive the tip portions (103) of said farm products (100) against it;
said destalking group (11) comprising at least one cutting member (13) substantially aligned with said abutment means (12) in order to cut the stalks (102) from said farm products (100) placed with their tip portions (103) against said abutment means (12).

2. Destalking machine (1) according to claim 1, **characterized in that** said abutment means (12) comprise multiple abutment bodies (14), each of which is placed at a respective end (7) of a corresponding said roller (6) and is arranged for advancing together with the corresponding said roller (6) along said advancement direction (X).

3. Destalking machine (1) according to claim 2, **characterized in that** said abutment bodies (14) have substantially frustoconical shape and are extended tapered along the main extension axis (Y) of the respective said roller (6), each between an enlarged base (15) placed spaced from the respective end (7) of the corresponding said roller (6) and an opposite narrow base (16) placed adjacent to the end (7) of the corresponding said roller (6) and having diameter substantially smaller than or equal to that of the corresponding said roller (6).

4. Destalking machine (1) according to any one of the preceding claims, **characterized in that** the rollers (6) of said series (S) are guidedly connected to said support frame (2) along at least said advancement direction (X) and are idly rotatable around the main extension axis (Y) thereof;
said second movement means (10) comprising at least one friction element (19) placed at least along said first operating section (W) and adapted to come into contact with said rollers (6) which advance on said first operating section (W) in order to rotate said rollers (16) around the corresponding said main extension axes (Y).

5. Destalking machine (1) according to claim 4, **characterized in that** said first movement means (9) comprise a support shaft (17) for each roller (6) of said series (S) of rollers (6), and said support shaft (17) is extended along the main extension axis (Y) of the corresponding said roller (6) and is guidedly connected to said support frame (2) along at least said advancement direction (X) in order to advance the corresponding said roller (6) along said advancement direction (X);
each said roller (16) comprising a sleeve (18), which is idly mounted on the corresponding said support shaft (17), has substantially cylindrical shape and is extended along said main extension axis (Y) between said two ends (7).

6. Destalking machine (1) according to claim 3 and 5, **characterized in that** said abutment bodies (14) are fixed to the corresponding said support shaft (17), which is rotatably blocked with respect to rotations around said main extension axis (Y).

7. Destalking machine (1) according to any one of the preceding claims, **characterized in that** said alignment group (5) comprises at least one conveyance body (20) extended along said advancement direction (X) above said series (S) of rollers (6), positioned between at least part of said first operating section (W) and said destalking group (11), and placed at least in an interference position, in which said conveyance body (20) is placed at a respective side (L) of said series (S) of rollers (6) and is susceptible of intercepting said farm products (100) in order to push said farm products (100) on said abutment means (12).

8. Destalking machine (1) according to claim 7, **characterized in that** said alignment group (5) comprises actuator means (21) connected to said conveyance body (20) and arranged for moving said conveyance body (20) transverse to said advancement direction (X) between a wait position, in which it is spaced from the side (L) of said series (S) of rollers (6), and said interference position, in which it is brought at said side (L) in order to push said farm products (100) on said abutment means (12).

9. Destalking machine (1) according to claim 7 or 8, **characterized in that** said alignment group (5) comprises third movement means (22) mounted on said support frame (2), mechanically connected to said conveyance body (20) and arranged for translating said conveyance body (20) parallel to said advancement direction (X) at least along a second operating section (Z) of said advancement direction (X) placed between at least part of said first operating section (W) and said destalking group (11).

10. Destalking machine (1) according to any one of the preceding claims, **characterized in that** said destalking group (11) comprises at least one positioning member (23) at least partially side-by-side said cutting member (13) and placed above said abutment means (12) in order to maintain the farm products (100) to be destalked in position with respect to said abutment means (12) at least when said farm products (100) come into contact with said cutting member (13).

11. Destalking machine (1) according to any one of the preceding claims, **characterized in that** said abutment means (12) are placed on both sides (L) of said series (S) of rollers (6) and that said destalking group (11) comprises two said cutting members (13) placed at the respective sides (L) of said series (S).

12. Method for destalking farm products (100), by means of a destalking machine (1) according to any one of the preceding claims, which provides for:
- a loading step, in which said farm products (100) to be destalked are supplied to said alignment group (5) at said inlet section (3), being placed in the reception seats (8) defined by said rollers (6);
- an alignment step, in which said rollers (6), actuated by said first movement means (9), advance along said advancement direction (X) from said inlet section (3) to said outlet section (4) and are actuated to rotate, along said first operating section (W), by said second movement means (10), such that said rotating rollers (6) place said farm products (100) with their axes (A) substantially parallel to said main extension axes (Y) and advance said farm products (100) along said reception seats (8) close to the ends (7) of said rollers (6) towards which the tip portions (103) are directed up to said abutment means (12);
- a destalking step, in which the cutting member (13) of said destalking group (11) removes the stalks (102) from said farm products (100) placed with their tip portions (103) against said abutment means (11).
